# EUROPEAN PATENT APPLICATION

(11) **EP 0 890 867 A2**
(43) Date of publication of application: **13.01.1999**
(21) Application number: 98305466.9
(22) Date of filing: 09.07.1998
(51) Int. Cl.: G02F 1/1335, G04G 9/12

(54) **Display for an electronic timepiece**

(30) Priority: 09.07.1997 JP 184123/97
(71) Applicant: Seiko Epson Corporation, Shinjuku-ku, Tokyo 163-0811 (JP)
(72) Inventor: Arikawa, Yasuo, Swua-shi, Nagano-ken, 392-8502 (JP); Miyazawa, Eiichi, Swua-shi, Nagano-ken, 392-8502 (JP)
(74) Representative: Sturt, Clifford Mark

(57) **Abstract**

To provide an electronic timepiece which provides a bright and easy-to-read display, and a greater variety of display forms of numerical information, or the like, and a greater variety of background colours. An electronic timepiece including a polariser 11, a liquid crystal panel 8, and a polarised light separating film 12. The polarised light separating film 12 transmits a linearly polarised light component oriented in a certain direction (arrow Q) and reflects all other linearly polarised light components (arrow P). The internal structure of the polarised light separating film 12 is divided, in a plane, into polarised light separating portions 12a, 12b, and 12c which reflect light of different wavelengths. The polarised light separating film 12 reflects different colours in correspondence to the polarised light separating portions 12a to 12c. Using a reflecting-type polarised light separating film 12 allows a bright display to be realised, and providing a plurality of polarised light separating portions allows a greater variety of display forms to be realised.

## Description

The present invention relates to an electronic timepiece for measuring and display time, such as a wristwatch or a stopwatch.

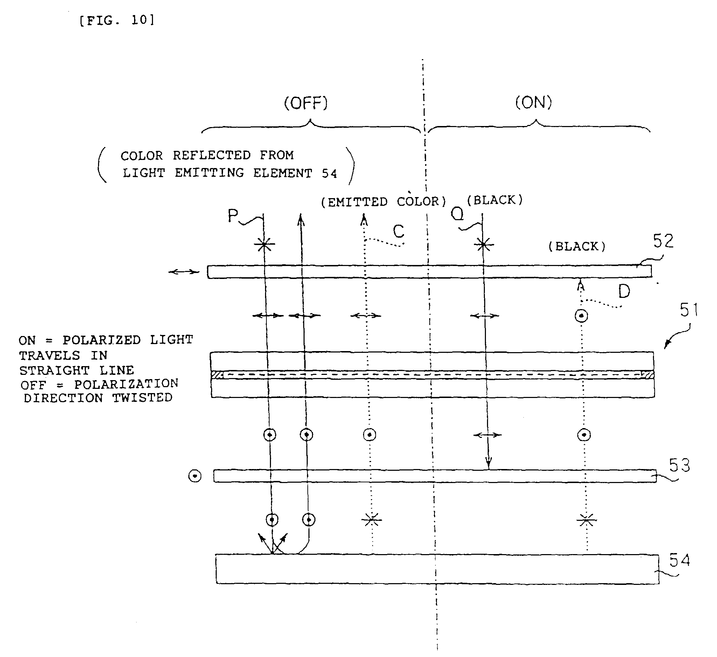

Conventionally, there are widely known electronic timepieces which utilise flat displays, such as liquid crystal displays, for displaying numbers, characters, or other information. For example, as shown in Fig. 10, in an electronic timepiece utilising a liquid crystal display device, a pair of polarisers 52 and 53 are placed on both sides of a liquid crystal panel 51, and a light-emitting element 54 is disposed at the back side of the polariser 53. The pair of polarisers 52 and 53 are disposed such that, for example, their azimuthal angles are set to form a right angle.

During daytime, conventional electronic timepieces display numerical information or the like using external light, whereas during the night they display numerical information or the like using light emitted from the light-emitting element 54, when necessary. Numerical information or the like is displayed by applying a predetermined voltage between the electrodes of the liquid crystal panel 51, with the area to which voltage is not applied appearing as a white background or the like. In the figure, the area to which a voltage is applied to display information is represented as ON, whereas the background colour area to which a voltage is not applied is represented as OFF.

As indicated by arrow P, when external light is used to produce background colour of a display (liquid crystal panel is turned off), the linearly polarised light component of the external light or natural light, which is oriented parallel to the plane of the figure passes through the polariser 52. Then, the polarisation direction thereof is twisted 90 degrees by the liquid crystal panel 51 in an off state, causing the linearly polarised light component to be oriented perpendicular to the plane of the figure. The linearly polarised light component, which has passed through the polariser 53, is irregularly reflected by a surface of the light-emitting element 54, and part of the irregularly reflected light is transmitted successively back through the polariser 53, the liquid crystal panel 51, and the polariser 52. The part of the irregularly reflected light from the light-emitting element 54 ordinarily produces a white background which is perceived by any viewer.

As indicated by arrow Q, when numerical information or the like is to be displayed using external light (the liquid crystal panel 51 is turned on), the linearly polarised light component, which is oriented parallel to the plane of the figure, is separated from the external light by the polariser 52, and passes through the liquid crystal panel 51. Since the liquid crystal panel 51 is in an on state, the polarisation direction of the linearly polarised light component is maintained parallel to the plane of the figure, so that it is absorbed by the polariser 53. The portion that has absorbed the light appears black to any viewer.

As can be understood from the foregoing description, when external light is used, numbers or the like are displayed on a background having a colour corresponding to that reflected from the light-emitting element 54 in order to display the time or other information.

On the other hand, as indicated by arrow C, when a background colour is to be produced using light emitted from the light-emitting element 54 (the liquid crystal panel 51 is turned off), the linearly polarised light component which is oriented perpendicular to the plane of the figure is separated from the light or random polarised light emitted from the light-emitting element 54 by the polariser 53. Since the liquid crystal panel 51 is in an off state, the polarisation direction of the linearly polarised light component is twisted 90 degrees by the liquid crystal panel 51, causing the linearly polarised light component to be oriented parallel to the plane of the figure. Then, the polarised light component passes through the polariser 52 and is perceived by an outside viewer. The perceived colour is the colour emitted from the light emitting element 54, which is ordinarily white.

As indicated by arrow D, when numerical information or the like is to be displayed using light emitted from the light emitting element 54 (the liquid crystal panel 51 is turned on), the linearly polarised light component, which is oriented perpendicular to the plane of the figure is separated from the light emitted from the light emitting element 54 by the polariser 53, passes through the liquid crystal panel 51 in an on state, and reaches the polariser 52. Here, the polarisation direction of the linearly polarised light component does not match the polarisation direction of the polariser 52, so that the linearly polarised light component is absorbed by the polariser 52. The portion, which has absorbed the light, appears black to an outside viewer.

As can be understood from the foregoing description, when light from the light-emitting element 54 is used, numbers or the like are displayed in black or the like on a background having a colour corresponding to the colour emitted from the light emitting element 54.

In the above-described conventional electronic timepiece, two polarisers 52 and 53 are disposed on both sides of the liquid crystal panel 51. These polarisers are capable of absorbing linearly polarised light components other than that having a predetermined polarisation axis. Therefore, the intensity of the light, led to the outside for producing a background colour or displaying numerical information or the like, may be greatly reduced, causing numerical information or the like to appear dark, and thus difficult to read.

In addition, in the above-described conventional electronic timepiece, only one colour is reflected by or emitted from the light emitting element 54 within a plane, so that the background colour and the displayed information, such as numerical information, have a single tone, which is not capable of attracting the attention of any viewer.

In view of the above-described problems, an object of the present invention to provide an electronic timepiece which is bright and easy to see. Another object of the present invention is to provide an electronic timepiece which provides a greater variety of display forms of numerical information or the like, and background colours, in order to easily attract the attention of any viewer.

To this end, according to the present invention, there is provided an electronic timepiece comprising
(1) first polarised light separating means which transmits linearly polarised light ray components oriented in one direction and while not transmitting therethrough light ray components linearly polarised in a direction perpendicular to said one direction;
(2) transmitting polarised light polarisation axis varying means, disposed at a location allowing the transmitting polarised light polarisation axis varying means to receive the linearly polarised light component transmitted by the first polarised light separating means, for selecting either one of a state in which a polarisation axis of the polarised light component being transmitted is changed and a state in which the polarisation axis of the polarised light component being transmitted is not changed; and
(3) second polarised light separating means for transmitting the linearly polarised light ray components oriented in a second direction and reflecting light ray components linearly polarised in a direction perpendicular to said second direction, the second polarised light separating means being disposed opposite the first polarised light separating means with the transmitting polarised light polarisation axis varying means interposed therebetween; wherein
(4) the second polarised light separating means has, within a plane, a plurality of polarised light separating portions reflecting light of different wavelengths.

In both of the above-described structures, an ordinary polariser can be used for the first polarised light separating means. An ordinary polariser is composed of a film-like member capable of allowing a linearly polarised light component, oriented in a certain direction, of the incident natural light to leave the display device. It is formed by, for example, placing a polarisation layer in a cellulose triacetate (TAC) protective layer.

A liquid crystal panel, for example, may be used for the aforementioned transmitting polarised light polarisation axis varying means. Various liquid crystals may be used, including a twisted nematic (TN) liquid crystal, a super-twisted nematic (STN) liquid crystal, and an electrically controlled birefringence (ECB) liquid crystal. STN liquid crystals include, for example, film compensated super-nematic (F-STN) liquid crystals using a colour compensating optical anisotropic member.

As the second polarised light separating means, there may be used, for example: 1) a polarised light separating film consisting of a plurality of laminated thin films disclosed in International Patent Publication Nos. W095/17692 and W095/27919; 2) a polarised light separating plate in which a (1/4)λ plate is provided at one or both sides of a cholesteric liquid crystal layer; 3) a polarised light separating member which separates polarised light components by reflection and transmission by setting the angle at the Brewster's angle (refer to pp. 427 to 429 in SID 92 DIGEST); or a polarised light separating member using a hologram.

Features of the electronic timepiece of the present invention having the above-described structure are (A) the use of the second polarised light separating means, corresponding to the structural element (3), instead of the polariser disposed at the back side of the transmitting polarised light polarisation axis varying means in conventional electronic timepieces; and (B) formation of a plurality of polarised light separating portions which reflect different wavelengths.

Whereas a commonly-used polarising plate transmits a linearly polarised light component oriented in one direction while not transmitting therethough light ray components linearly polarised in a direction perpendicular to said one direction by absorbing them or the like, the second polarised light separating means transmits linearly polarised light components oriented in second direction and reflects light ray components linearly polarised in a direction perpendicular to said second direction, and, in particular, totally reflects a linearly polarised light component oriented in a direction perpendicular to the polarisation axis of the polarised light being transmitted.

Therefore, according to the aforementioned feature (A), when a second polarised light separating means having the above-described structure is used instead of the commonly used polariser or the like, the light, which is absorbed or scattered when a polariser is used in conventional display devices or electronic timepieces, is reflected, so that the background of the electronic timepiece or information, such as numerical information, can be made bright by the reflected light, thereby making the numerical information or the like easier to read in relation to the background colour of the display. This is very convenient for people who have weak eyesight, such as old people.

In addition, according to the aforementioned feature (B), when a plurality of polarised light separating portions which reflect different wavelengths are disposed at different locations within a plane, and external natural light is reflected by the second polarised light separating means to produce background colour, or display numerical information or the like, the background colour is produced and numerical information or the like is displayed in different colours based on the wavelength characteristics of the individual polarised light separating portions. As a result, it is possible to produce a novel display that strongly attracts the attention of any viewer.

Embodiments of the present invention will now be described by way of further example only and with reference to the accompanying drawings, in which:-

Fig. 1 is a schematic view of the main portion of an embodiment of an electronic timepiece in accordance with the present invention.

Fig. 2 is a perspective view schematically showing the internal structure of the polarised light separating film used as the main portion in the structure of Fig. 1.

Fig. 3 is a schematic view illustrating the operation of the polarised light separating film of Fig. 2.

Fig. 4 is a sectional view of the structure of an electronic wristwatch used as an embodiment of the electronic timepiece in accordance with the present invention.

Fig. 5 is a plan view of the movement used in the electronic wristwatch of Fig. 4.

Fig. 6 is a sectional view of the movement of Fig. 5.

Fig. 7 is a plan view of the polarised light separating film.

Fig. 8 is a schematic view of the main portion of another embodiment of an electronic timepiece in accordance with the present invention.

Fig. 9 is a schematic view of the main portion of still another embodiment of an electronic timepiece in accordance with the present invention.

Fig. 10 is a schematic view of the main portion of a conventional electronic timepiece.

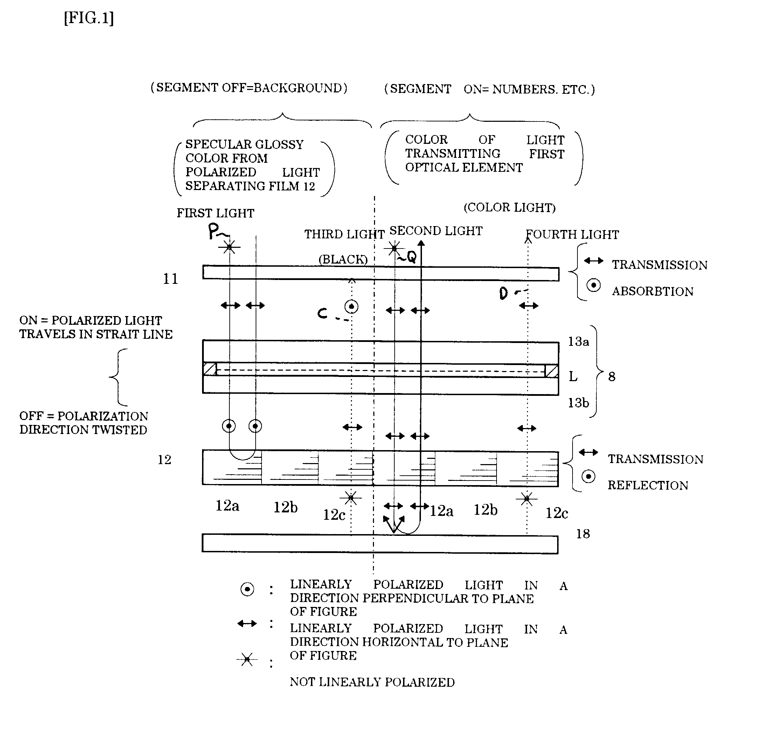

(1) A light scattering layer may be provided opposite the first polarised light separating means with the transmitting polarised light polarisation axis varying means interposed therebetween. For example, in the electronic timepiece of the present invention, external natural light, received by the first polarised light separating means, passes through the transmitting polarised light polarisation axis varying means, and leaves the electronic timepiece after being reflected by the second polarised light separating means (as indicated by arrow P of Fig. 1). In this case, when there is nothing disposed in the optical path, the light is specularly reflected out the electronic timepiece, and the specularly reflected light is perceived by the viewer as background colour. On the other hand, when the light scattering layer is disposed in the optical path, the viewer perceives a white colour or other appropriate colours instead of a specularly reflected colour. The designer or the like is free to choose between a structure that allows specular reflection and a structure that allows an appropriate colour to be produced.

(2) In addition to the aforementioned structural elements, a light-emitting means for emitting light to the transmitting polarised light polarisation axis varying means through the second polarised light separating means may be provided. The light-emitting means which may be used include: 1) a planar light-emitting member like an electroluminescence (EL) member; 2) a light-emitting device in which a cold cathode, being a linear light source, is disposed at a side end face of a light guide plate having a planar light-emitting surface; and 3) a light emitting device or the like in which a plurality of light emitting diodes (LEDs), being point-like light sources, are disposed in a row at a side end face of a light guide plate having a planar light emitting surface.

When a light-emitting means is used as an additional structural element as in the present embodiment, the viewer can freely select a display method, that is the display method using external natural light or that using a light-emitting means. In addition, when, as in the present invention, the second polarised light separating means, which transmits a linearly polarised light component oriented in a certain direction and reflects a linearly polarised light component parallel thereto, is used instead of an ordinary polariser, numerical information or the like can be displayed in various forms, and various background colours can be produced, compared to conventional electronic timepieces in which two polarisers are used for displaying information or producing a background colour.

For example, in conventional devices, when the display method is switched between that using external natural light and that using the light emitting means, there is not much difference between the background colours and the forms of display of such information as numerical information. For example, when numerical information or the like is displayed in a dark colour, such as black, on a background with a colour corresponding to the reflected colour or the emitted colour of the light emitting element 54, and the display method is switched, only the way in which the background colour is produced by the light emitting element 54 is changed, so that the background colour is either produced by the reflected colour or the emitted colour of the light emitting element 54, ordinarily causing the background colour to be the same in both cases. Similarly, when numerical information or the like is displayed in a colour corresponding to the reflected colour or emitted colour of the light emitting element 54 on a background with a dark colour, such as black, only the way in which the colour of the numerical information or the like is produced by the light emitting element 54 is changed, so that the colour of the numerical information or the like is produced either by the reflected colour or the emitted colour of the light emitting element 54.

Compared to the above-described conventional devices, the electronic timepiece of the present invention comprising a light emitting means is constructed in such a way as to allow the background colour and the form of display of the numerical information or the like to be changed drastically, when the display method switches between that using external natural light and that using the light emitting means. This change may surprise the viewer.

For example, when the display method is switched from that using external natural light to that using the light-emitting means, the ordinary display form, in which numerical information or the like is displayed in a dark colour, such as black, on a bright background colour, is switched from the display form in which numerical information or the like is displayed in a colour characteristic of the light emitting means on a dark background, such as a black background. This change in display form is effective in surprising the viewer, and is also, in practice, effective in the following ways.

For example, when a digital wristwatch is used as an electronic timepiece, and the wristwatch is made visible, during the night when it is dark out, by light emitted from the light emitting means, it is possible to display numerical information or the like in a colour, such as red, which can be easily distinguished from black on a black background colour. In addition, when a divers watch for use in the water is used as an electronic timepiece in order to give a warning to the diver as regards water pressure and diving time, a colour, such as yellow, which stands out can be used to give a warning.

(3) When a light emitting means is used as a structural element, a translucent layer may be provided between the second polarised light separating means and the light emitting means thereof. For example, in the electronic timepiece of the present invention, natural light, received by the first polarised light separating means, passes through the transmitting polarised light polarisation axis varying means and the second polarised light separating means and arrives at the surface of the light emitting means (as indicated by arrow Q of Fig. 1), with the light ordinarily being irregularly reflected by the surface of the light emitting means. The colour in which numerical information or the like is displayed depends on the colour produced at the portion where light is irregularly reflected. A portion of the light irregularly reflected from the portion where the information is displayed leaves it, so that the contrast of this portion is reduced by a corresponding amount with respect to the background colour, making the displayed numerical information or the like difficult to read.

When a translucent layer is provided between the second polarised light separating means and the light emitting means, as mentioned above, the light is absorbed by the translucent layer, so that the luminance of the information to be displayed is sufficiently reduced, as a result of which the displayed numerical information or the like has high contrast.

(4) It is desirable to construct the light emitting means so that it emits at least one of the following colours, orange, red, or yellowish green. In the electronic timepiece of the present invention, numerical information or the like is displayed in the colour emitted by the light emitting means. Since the aforementioned colours stand out against black, when the light emitting means is made to emit any one of the aforementioned colours to display numerical information or the like in any one of these colours, the displayed information becomes bright and easy to read, thereby easily attracting the human eye.

(5) In the foregoing description, nothing was particularly stated about whether the light emitting means is to emit a single colour or a plurality of colours. When the light emitting means is constructed to emit a plurality of colours, numerical information or the like can be displayed in several colours in one electronic timepiece, so that displays of a greater variety of colours can be realised.

(6) When the aforementioned light emitting means is used to emit a plurality of colours, the colour emitted by the light emitting source itself may be changed, and the light emitting means may be composed of a white light emitting source and a colour filter.

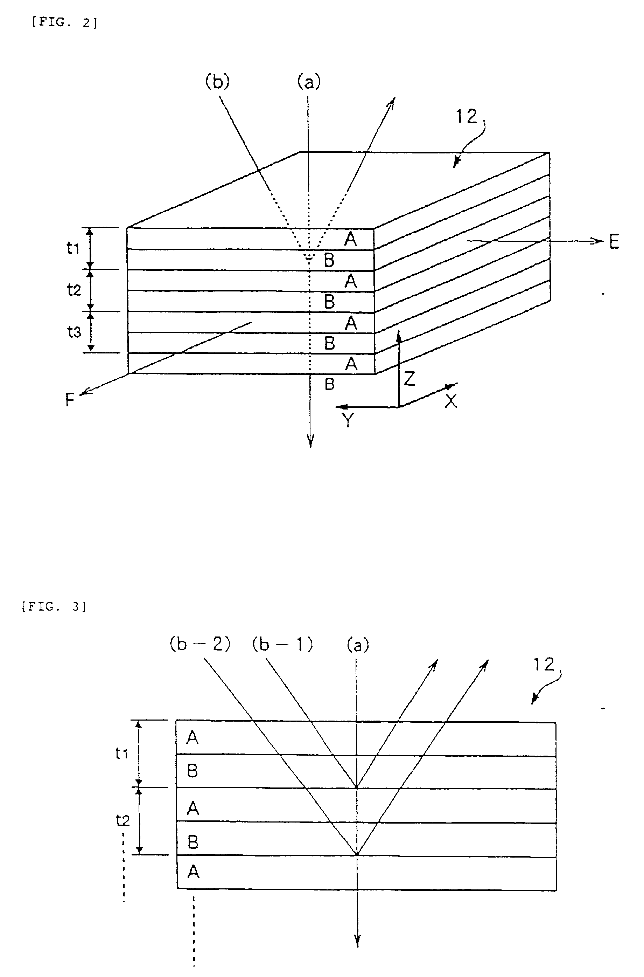

(7) As mentioned above, various polarised light separating elements can be used for the second polarised light separating means, but it is desirable that a polarised light separating film, of the type disclosed in International Patent Publication Nos. W095/17692 or W095/27919, be used for the second polarised light separating means. For example, the polarised light separating film, shown in Fig. 2, may be used, which has a multi-layered structure formed by alternately laminating two types of layers A and B. Any two adjacent layers A and B have the same refractive index in a certain direction, but different refractive indices in a direction perpendicular to the certain direction, and each of the individual layers have different thicknesses.

In Fig. 2, three axial directions X, Y, and Z, which are perpendicular to each other, are defined. A multi-layered structure is formed by subjecting layers A and B to, for example, extrusion molding, and stretching them in a certain direction (such as direction X), but not in direction Y, when the stretching direction is in direction X. In other words, the X-axis direction corresponds to the stretching direction, whereas the Y-axis direction is oriented transversally with respect to the stretching direction. Material B has a refractive index n_{B} (such as 1.64), which essentially does not change when stretching is performed. On the other hand, the refractive index of material A changes when stretching is performed. For example, uniaxially stretching a sheet made of material A causes it to have a refractive index n_{AX} (such as 1.88) in the stretching direction (that is direction X) and a different refractive index n_{AY} (such as 1.64) in a transverse direction with respect to the stretching direction (that is, direction Y). Stretching the layered structure of Fig 2 formed of materials A and B in the direction X causes it to have a refractive index difference of Δn = 1.88 - 1.64 = 0.24 in the stretching direction. On the other hand, there is no difference between the refractive indices of the A and B layers in the direction Y perpendicular to the stretching direction, since Δn = 1.64 - 1.64 = 0. Since the layered structure has the aforementioned optical property, when light impinges upon the polarised light separating film 12, the polarised light component (a) of the incident light which is oriented in the direction of polarisation axis E passes through the polarised light separating film 12. On the other hand, the polarised light component (b) of the incident light which is oriented in the direction of absorption axis F directly strikes a surface having a refractive index difference An, so that it is reflected at the surface.

In addition, thicknesses t1, t2, t3,..., of each of the layers A and B differ slightly, so that, as shown in Fig. 3, light beams of different wavelengths, (b-1), (b-2), ..., can be reflected at the boundary surfaces between layers A and B. In other words, a multi-layered structure consisting of layers A and B with different thicknesses allows light consisting of various wavelengths to be efficiently reflected.

When the thicknesses, t1, t2, t3, ..., of each of the layers are combined in such a way as to reflect all light wavelengths, the final colour of the reflected light is white. When suitable combinations of the thicknesses, t1, t2, t3, ..., of each of the layers are used, the polarised light separating film 12 can be made to selectively reflect only the desired wavelength or colour. When a plurality of types of polarised light separating films, each of which has thickness combinations that differ from one another, are disposed at different locations within a plane, and are irradiated by natural light, different colours can be reflected from each of the polarised light separating films. This allows the electronic timepiece to provide an even greater variety of display forms.

(8) According to the present invention, there is provided an electronic timepiece comprising:
a polariser;
a twisted nematic (TN) liquid crystal layer interposed between two substrates; and
a polarised light separating film;
wherein the polariser, the twisted nematic liquid crystal layer, and the polarised light separating film are laminated in that order to form the electronic timepiece;
wherein the polarised light separating film transmits a polarised light component travelling in a first direction and reflects a polarised light component travelling in a direction perpendicular to the first direction, the polarised light separating film including at least a first area and a second area; and
wherein the liquid crystal layer includes at an upper portion thereof a first display area in correspondence with the first area and a second display area in correspondence with the second area.

By virtue of this construction, when the display areas of the electronic timepiece are assigned different functions, such as a calendar function, a clock function, or a graph function, the colour of each of the display portions can be changed, making the electronic timepiece very easy to see.

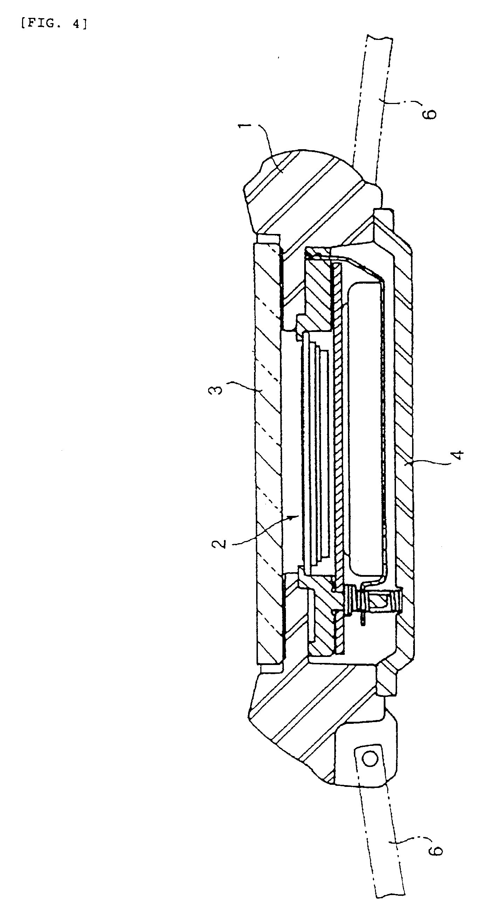

Fig. 4 is a sectional view of the structure of an embodiment of an electronic wristwatch used to describe the electronic timepiece in accordance with the present invention. The wristwatch comprises, for example, a plastic case 1, a movement 2 contained in the case 1, a glass plate 3 affixed to the case 1 and disposed above the movement 2, and a back cover 4 affixed to the movement 2. Reference numeral 6 denotes a wristband.

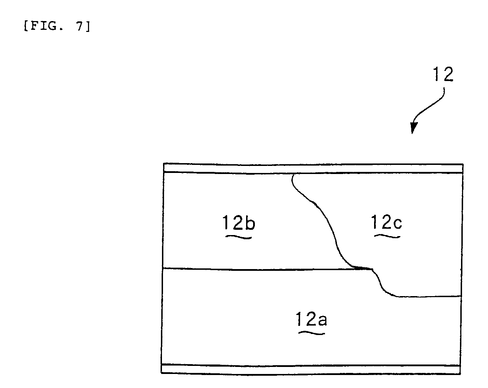

As shown in Fig. 6, the movement 2 includes a panel frame 7; a liquid crystal panel 8, serving as a transmitting polarised light polarisation axis varying means, supported by the panel frame 7; a polariser 11, serving as a first polarised light separating means, affixed to the outside surface (upper surface in the figure) of the liquid crystal panel 8; a polarised light separating film 12, serving as a second polarised light separating means, disposed opposite the polariser 11 with the liquid crystal panel 8 interposed therebetween; a backlight 18, serving as a light-emitting means, disposed at the bottom surface side of the polarised light separating film 12; and a battery 9.

The polariser 11 is an ordinary polariser that transmits only linearly polarised light oriented in a certain direction, and blocks all other types of linearly polarised light by absorption, scattering, or the like. As shown in Fig. 2, the polarised light separating film 12 is a laminated structure of a plurality of thin films. As mentioned above, the polarised light separating film 12 transmits only linearly polarised light oriented in a certain direction, and blocks all other types of linearly polarised light, not by absorption or the like, but by reflection. The polarised light separating film 12 transmits, in particular, linearly polarised light oriented in a direction perpendicular to the transmitting polarised light polarisation axis by total reflection.

As shown in Figs. 1 and 7, the polarised light separating film 12 of the present embodiment is divided into three polarised light separating portions 12a, 12b, and 12c. Each polarised light separating portion has a laminated structure of thin films, as shown in Fig. 2, with thicknesses, t1, t2, t3, ..., of the layers of their respective thin film laminated structure being different among the polarised light separating portions 12a, 12b, and 12c. As a result, each of the polarised light separating portions 12a, 12b, and 12c reflect different wavelengths. In other words, when a linearly polarised light oriented in a particular direction impinges upon the polarised light separating film 12, different colours are obtained from each of the polarised light separating portions 12a, 12b, and 12c. Various methods can be used to dispose the plurality of polarised light separating portions 12a, 12b, and 12c within a plane, such as properly arranging them in a row on a base film and affixing them thereto using an adhesive or the like.

The backlight 18 of Fig. 6 is composed of, for example, an electroluminescence (EL) member which is a planar light-emitting member. One surface of the backlight 18 is formed into a light-scattering surface for scattering light, and, in the present embodiment, is grey.

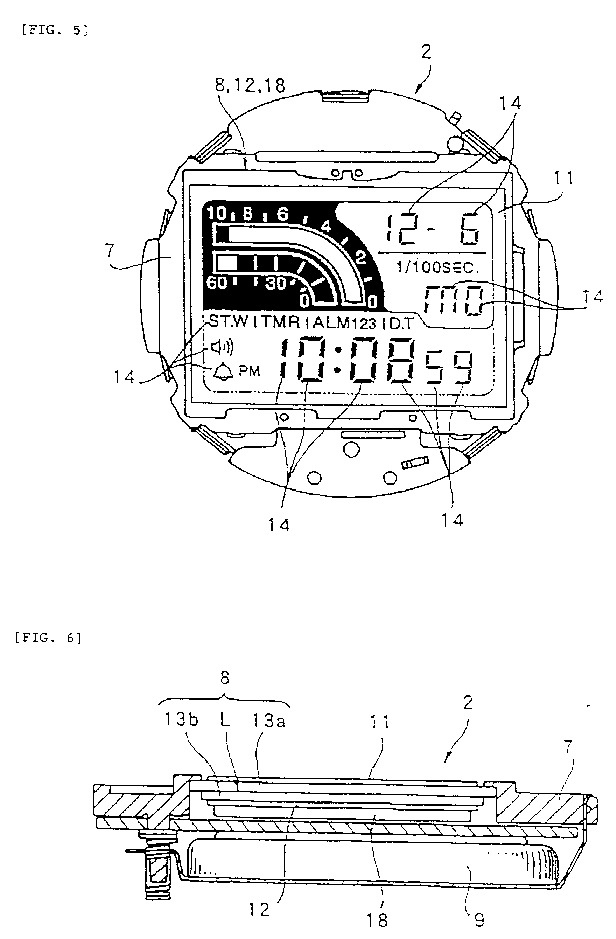

The liquid crystal panel 8 comprises a pair of opposing transparent glass substrates 13a and 13b, with a so-called cell gap formed therebetween. Liquid crystal, such as a twisted nematic (TN) liquid crystal L, is filled in the cell gap. As shown in Fig. 5, a plurality of transparent electrodes 14 are formed on each of the glass substrates 13a and 13b in order to display, for example, numbers or characters. In the present embodiment, each of the transparent electrodes is divided into seven segments used for displaying one digit.

A predetermined voltage can be applied between the opposing pairs of transparent electrodes 14 formed on the pair of glass substrates 13a and 13b. The liquid crystal L is set in either of two alignment states depending on whether a voltage is applied (ON) or not applied (OFF). In the present embodiment, when the liquid crystal is set in an on state, the axis of the linearly polarised light is not changed, whereas when the liquid crystal is set in an off state, the axis of the linearly polarised light is twisted 90 degrees.

A description will now be given of the operation of the electronic wristwatch having the above-described structure. The wristwatch has two types of light sources, backlight 18 and external natural light. When background colour of the wristwatch is to be produced, the area of the liquid crystal panel 8 corresponding to the background is turned off, whereas when numerical information or the like is to be displayed, the area of the liquid crystal panel 8 corresponding to where the numerical information is to be displayed is turned on. The uses of external natural light and backlight are separately described below.

### (When external natural light is used)

When outside natural light is used, particularly for producing background colour, the liquid crystal panel 8 of Fig. 1 is set in an off state. Then, as indicated by arrow P in the same figure, the linearly polarised light component of the external light or natural light oriented in a direction parallel to the plane of the figure passes through the polariser 11, and its polarisation direction is twisted 90 degrees by the liquid crystal panel 8 set in an off state, causing the linearly polarised light to be oriented in a direction perpendicular to the plane of the figure. The linearly polarised light component is reflected by each of the layer surfaces in the polarised light separating film 12 in accordance with its wavelength. The reflected light component pass successively through the liquid crystal panel 8 and the polariser 11 for producing the background colour which is perceived by the viewer.

In the present embodiment, as shown in Fig. 7, the polarised light separating film 12 is divided into polarised light separating portions 12a, 12b, and 12c, each of which reflects a different colour. Therefore, the display surface of the electronic timepiece has a multi-coloured background obtained from the plurality of portions. A greater variety of display forms can be provided for the viewer compared to the case where either one of the ordinarily used colours, white or grey, is used singly.

When external natural light is to be used to display numerical information or the like, the liquid crystal panel 8 is set in an on state. Then, as indicated by arrow Q, the linearly polarised light component which is parallel to the plane of the figure is separated from the external light by the polariser 11, and passes through the liquid crystal panel 8. Here, the liquid crystal panel 8 is in an on state, so that the polarisation direction of the linearly polarised light component stays parallel to the plane of the figure. Therefore, the linearly polarised light component passes through the polarised light separating film 12, and is irregularly reflected by the surface of the backlight 18. Seen from the outside, this portion has a dark colour, such as grey, so that numerical information or the like is displayed in a dark colour or in grey, which is perceived by the viewer.

As can be understood from the foregoing description, when external natural light is used, numerical information or the like can be displayed in a dark colour on a background having different colours produced in correspondence with the positions of the polarised light separating portions 12a, 12b, and 12c of the polarised light separating film 12.

### (When backlight 18 is used)

When backlight 18 is used for producing, in particular, background colour, the backlight 18 is turned on, and the liquid crystal panel 8 is set in an off state. Then, as indicated by arrow C, the linearly polarised light component oriented parallel to the plane of the figure is separated from the light or random polarised light emitted from the backlight 18 by the polarised light separating film 12. Thereafter, the polarisation direction of the linearly polarised light component is twisted 90 degrees by the liquid crystal display panel 8 set in an off state, causing the linearly polarised light component to be oriented in a direction perpendicular to the plane of the figure. The linearly polarised light component, which is either absorbed or scattered by the polariser 11, is prevented from travelling out the display device, so that from the outside the background appears black.

When backlight 18 is to be used to display numerical information or the like, the backlight 18 is turned on and the liquid crystal panel 8 is set in an on state. Then, as indicated by arrow D, the linearly polarised light component oriented parallel to the plane of the figure is separated from the light of the backlight 18 by the polarised light separating film 12. The linearly polarised light component passes through the liquid crystal panel 8 in an on state, and then through the polariser 11, whereby numerical information or the like is displayed.

As can be understood from the foregoing description, when, for example, the light emitted from the backlight 18 is used, numerical information, such as time or the like, is displayed on a black background. For example, when the backlight 18 is made to emit a red colour, the information is displayed in red on a black background. Information on such displays is much easier to read than in conventional displays in which, at night, information is displayed in black on a white background.

In addition, such displays are suitable for use in, for example, a divers watch for giving a warning to the diver. More specifically, when it becomes necessary to give a warning to the diver as regards the water pressure or the diving time, the backlight 18 can be made to emit a colour that easily attracts the human eye, such as yellow, to produce a yellow colour on a black background, with such a display form being effective in warning the diver.

The backlight 18 may be made to emit light of various colours in accordance with the demands of the viewer. When the backlight 18 is made to emit orange light, red light, or yellowish green light, the displayed information can be easily read, since these colours can be easily distinguished from a black.

The display form of an electronic timepiece using external light greatly differs from the display form of an electronic timepiece using backlight 18, so that the electronic timepiece easily attracts the attention of the viewer, making the two forms of display extremely advantageous.

The backlight 18 may be made to emit a single colour from the entire surface thereof, or be made to emit as a whole multiple colours from several divided sections thereof each emitting a different colour. When numerical information or the like is to be displayed using the backlight 18 set to emit multiple colours, various information can be displayed in different colours, so that multiple forms of display that meet various demands can be realised.

In the conventional device of Fig. 10, when background colour is to be produced using external light, the external light passes through the polariser 53 twice, as indicated by arrow P. When the external light passes through the polariser 53, the intensity of the white colour of the background may be reduced, which may darken the display of the wristwatch. In the wristwatch of the present embodiment, however, as indicated by arrow P of Fig. 1, external natural light is reflected by the polarised light separating film 12, and the reflected external light is used to produce the background colour. Therefore, less light is absorbed by the polariser, so that the background becomes bright. This makes it possible to provide a display which allows people who have weak eyesight, such as old people, to easily read the displayed information.

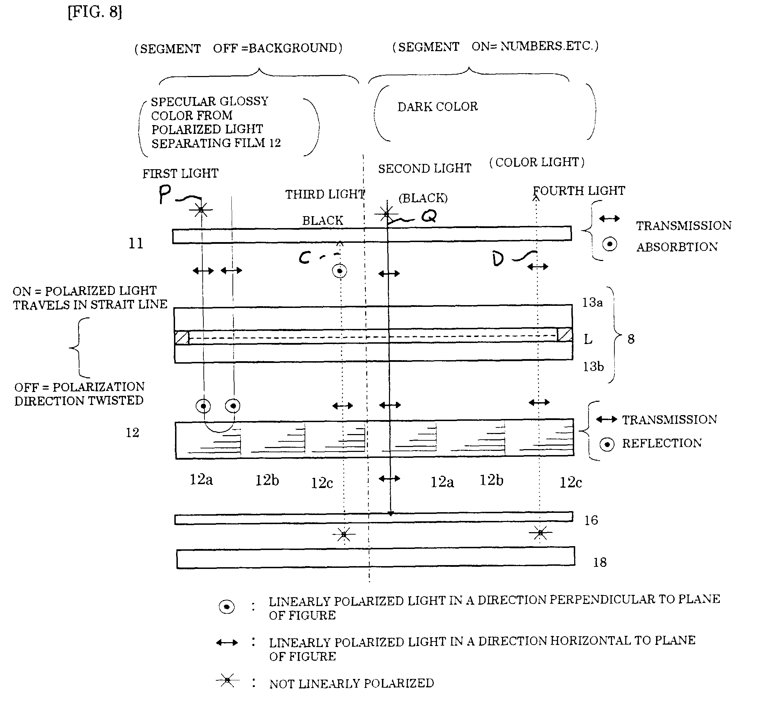

Fig. 8 is a view showing the main portion of still another embodiment of an electronic timepiece in accordance with the present invention. The present embodiment differs from the previously described embodiment of Fig. 1 in that a translucent layer 16 is disposed between the polarised light separating film 12 and the backlight 18. The translucent layer 16 is formed of, for example, a grey light-absorbing material in a translucent state or a black light-absorbing material, and has a plurality of holes for transmitting light.

In the present embodiment, as indicated by arrow Q, when the liquid crystal panel is set in an on state in order to display numerical information or the like using external natural light, the linearly polarised light leaving the polarised light separating film 12 is either absorbed or scattered by the translucent layer 16, so that the portion where absorption or scattering occurs has a vivid black colour. In this case, compared to the case where numerical information or the like is displayed in a dark colour, such as grey, as a result of irregularly reflecting light from one surface of the backlight 18, as indicated by the arrow Q of Fig. 1, the numerical information or the like can be displayed with high contrast.

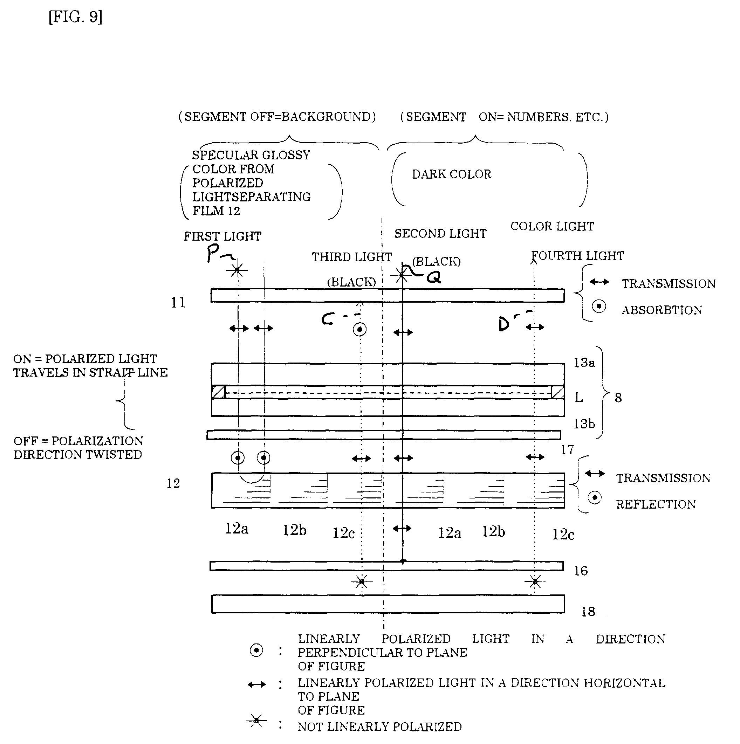

Fig. 9 is a view showing the main portion of still another embodiment of an electronic timepiece in accordance with the present invention. The present embodiment differs from the embodiment of Fig. 1 in that a translucent layer 16 is disposed between the polarised light separating film 12 and the backlight 18, and that a light scattering layer 17 is disposed between the liquid crystal panel 8 and the polarised light separating film 12. In the present embodiment, various background colours can be obtained by scattering light from the light scattering layer 17, instead of by specular reflection.

Although the present invention was described with reference to the preferred embodiments thereof, the present invention is not limited thereto, so that various modifications can be made within the scope of the claims of the present invention.

In the present embodiments, the invention was described using a wristwatch. Obviously, the present invention may be applied to any other electronic timepiece having a different structure, such as a stopwatch. A light-emitting element other than an EL element may be used for the light-emitting means.

Although in the present embodiments a TN liquid crystal panel was used as the transmitting polarised light polarisation axis varying means for selecting either a state in which the polarisation axis of the polarised light being transmitted is changed or a state in which the polarisation axis of the polarised light being transmitted is not changed, an STN liquid crystal panel or an ECB liquid crystal panel may also be used.

In addition, although a multi-layered structure consisting of a plurality of laminated thin films, such as that shown in Fig. 2, was used as the second polarised light separating means which transmits linearly polarised light oriented in a certain direction and reflects linearly polarised light oriented perpendicular thereto, there may also be used, for example: 1) a polarised light separating plate in which a (1/4)λ plate is provided at one or both sides of a cholesteric liquid crystal layer; 2) a polarised light separating member which separates polarised light components by reflection and transmission by setting the angle at the Brewster's s angle (refer to pp. 427 to 429 of SID 92 DIGEST); and 3) a polarised light separating member utilising a hologram.

Although in the present embodiment the transmitting polarised light polarisation axis of the polariser 11 and the transmitting polarised light polarisation axis of the polarised light separating film 12 have been described as being parallel to each other, the transmitting polarised light polarisation axis of the polariser 11 and the transmitting polarised light polarisation axis of the polarised light separating film 12 can be set perpendicular to each other. In such a case, when outside natural light is used to set the segments in the off state or the on state, the colour of the segments in the off state and the colour of the segments in the on state are opposite to those in an electronic timepiece where the transmitting polarised light polarisation axis of the polariser 11 and the transmitting polarised light polarisation axis of the polarised light separating film 12 are parallel to each other. The same is true when backlight is used, instead of outside natural light.

A description will be given of the relationship between the electronic timepiece of Fig. 5 and the polarised light separating film of Fig. 7. The division lines on the polarised light separating film of Fig. 7 correspond to the division lines on the electronic timepiece of Fig. 5. An embodiment in which outside natural light is used to change the colour reflected from each of the divided portions of the polarised light separating film will be described below.

Reference numeral 12a of Fig. 7 denotes an area corresponding to the current time display area (displaying 10:08'59) of Fig. 5. It is desirable that the background colour (corresponding to the colour of the portion not having segments) be white. In the electronic timepiece of Fig. 5, this area becomes the main display area, so that a basic colour is used for this area.

Reference numeral 12b of Fig. 7 denotes an area corresponding to the upper left graph display area of Fig. 5. The graph extending portion includes segments. It is desirable that the area not including segments be red. The graph boundaries and the numbers are printed in black on a glass held by the TN liquid crystal layer, so that they are always indicated on the timepiece.

Reference numeral 12c of Fig. 7 denotes an area corresponding the upper right calendar display area of Fig. 5. It is desirable that the background colour be blue. Like the graph boundaries and the numbers in the section 12b of Fig. 7, 1/100 SEC or the like is printed.

As shown in Fig. 7, the polarised light separating film is divided into three areas 12a to 12c, so that the background colour can be changed in accordance with the functions (the time function, the graph function, and the calendar function), thus making it easier to distinguish between the display portions. As a result, an electronic timepiece which can easily be seen can be provided.

According to the electronic timepiece of Claim 1, background colour is produced and numerical information or the like is displayed by light reflected from the second polarised light separating means, so that unlike the conventional case where background colour or the like is produced by light transmitted through a polariser, the problem of reduced luminance due to absorption of light by the polariser does not exist, so that a bright and vivid display can be provided. In addition, the second polarised light separating means is composed of a plurality of polarised light separating portions with different wavelength characteristics, so that the background and displayed numerical information or the like can be made to have differently coloured portions, thereby allowing the electronic timepiece to provide a still greater variety of display forms.

According to the electronic timepiece of Claim 2, light scattered from the light scattering layer is used, so that a white background or a background having any other colour can be produced without making use of specular reflection.

According to the electronic timepiece of Claim 3, when a second polarised light separating means, which reflects, rather than absorbs, linearly polarised light components other than a particular linearly polarised light component, and a light emitting means are used in combination, and the method of display is switched from that using external natural light to that using a light emitting means, the background colour and the display form of information can be changed considerably, with such a change surprising the viewer.

According to the electronic timepiece of Claim 4, when external light is used to display numerical information or the like, a translucent layer absorbs light, causing the information to be displayed in black, so that a high contrast with respect to the background colour can be realised.

According to the electronic timepiece of Claim 5, when orange, red, or yellowish green, which can be easily distinguished from a black background, is used to display numerical information or the like, the displayed information can be very easily read.

According to the electronic timepiece of Claim 6, when a light emitting surface of the light emitting means is divided into several areas which emit a plurality of colours in order to display numerical information or the like, various information can be displayed in different colours, making it possible to provide a variety of display forms which meet various demands.

According to the electronic timepiece of Claim 7, even when a common light emitting source that emits white colour is used, a variety of colours can be produced by the light emitting means.

According to the electronic timepiece of Claim 8, a polarised light separating film having a laminated structure of a plurality of thin films is used as the second polarised light separating means. The polarised light separating film with this structure can be made very thin and flexible, so that the electronic timepiece as a whole can be made thin, thereby facilitating the production process. When, as in Claim 1, the second polarised light separating means is formed so as to have a plurality of polarised light separating portions of different wavelength characteristics, and thin films are laminated to form the portions, the polarised light separating portions can be easily and reliably formed.

## Claims

1. An electronic timepiece for measuring and displaying time, comprising:
first polarised light separating means which transmits linearly polarised light ray components oriented in one direction while not transmitting therethrough light lay components linearly polarised in a direction perpendicular to said one direction;
transmitting polarised light polarisation axis varying means, disposed at a location allowing said transmitting polarised light polarisation axis varying means to receive the linearly polarised light component transmitted by said first polarised light separating means, for selecting either one of a state in which a polarisation axis of the polarised light component being transmitted is changed and a state in which the polarisation axis of the polarised light component being transmitted is not changed; and
second polarised light separating means for transmitting the linearly polarised light ray components oriented in a second direction and reflecting light ray components linearly polarised in a direction perpendicular to said second direction, said second polarised light separating means being disposed opposite said first polarised light separating means with said transmitting polarised light polarisation axis varying means interposed therebetween;
wherein said second polarised light separating means has, within a plane, a plurality of polarised light separating portions reflecting light of different wavelengths.

2. An electronic timepiece according to Claim 1, further comprising a light scattering layer disposed opposite said first polarised light separating means with said transmitting polarised light polarisation axis varying means interposed therebetween.

3. An electronic timepiece according to Claims 1 or 2, further comprising light emitting means which emits light to said transmitting polarised light polarisation axis varying means through said second polarised light separating means.

4. An electronic timepiece according to Claim 3, further comprising a translucent layer disposed between said second polarised light separating means and said light emitting means.

5. An electronic timepiece according to Claims 3 or 4, wherein said light emitting means emits at least one of orange, red, and yellowish green.

6. An electronic timepiece according to at least any one of Claims 3 to 5, wherein said light emitting means emits a plurality of colours within a plane.

7. An electronic timepiece according to at least any one of Claims 3 to 6, wherein said light emitting means includes a colour filter.

8. An electronic timepiece according to at least any one of Claims 1 to 7, wherein each of said polarised light separating portions of said second polarised light separating means has a multi-layered structure formed by alternately laminating two types of layers, with any two adjacent layers of the plurality of layers in the lamination direction having the same refractive index in a certain direction, but having different refractive indices in a direction perpendicular to the certain direction, each of said layers of said plurality of layers forming each of said polarised light separating portions having different thicknesses, and said multi-layered structures of said polarised light separating portions having different thickness combinations so that each of said polarised light separating portions has different wavelength characteristics.

9. A timepiece, comprising:
a polariser;
a twisted nematic (TN) liquid crystal layer interposed between two substrates; and
a polarised light separating film;
wherein said polariser, said twisted nematic liquid crystal layer, and said polarised light separating film are laminated in that order to form said electronic timepiece;
wherein said polarised light separating film transmits a polarised light component travelling in a first direction and reflects a polarised light component travelling in a direction perpendicular to the first direction, said polarised light separating film including at least a first area and a second area; and
wherein said liquid crystal layer includes at an upper portion thereof a first display area in correspondence with the first area and a second display area in correspondence with the second area.
